# EUROPEAN PATENT APPLICATION

(11) **EP 3 604 871 A1**
(43) Date of publication of application: **05.02.2020**
(21) Application number: 18425062.9
(22) Date of filing: 02.08.2018
(51) Int. Cl.: F16K 3/26, F16K 11/07, F16K 31/06

(54) **SOLENOID VALVE**

(71) Applicant: Dana Motion Systems Italia S.R.L., 42124 Reggio Emilia (IT)
(72) Inventor: Trinchieri, Piergiorgio, 42123 Reggio Emilia (IT)
(74) Representative: Pfenning, Meinig & Partner mbB

(57) **Abstract**

The present disclosure describes a solenoid valve. The solenoid valve comprises a fixed member having a tube portion; a mobile plunger positioned in the tube portion, the mobile plunger being axially movable between a first and a second position; a rod coupled to the mobile plunger and having a spool for control of fluid flow, the rod being axially movable in the tube portion; and an electromagnetic coil positioned externally to the fixed member, characterised in that the rod has a coupling end and the mobile plunger has a coupling element wherein the coupling end hookingly couples to the coupling element.

## Description

### Technical Field

This disclosure relates generally to the field of electromagnetically controlled valves, and particularly to the field of solenoid valves.

### Background

Valves are used in a variety of technical applications for controlling the flow of a fluid. Electromagnetically controlled valves have an electromagnet and by means of the electromagnet, the valve can be opened and closed.

WO0250462 discloses an electromagnetically-actuated two-way two-position valve that is normally closed. The valve comprises an axially-mobile group which has an upper end that faces a fixed group. An obturator is intercepted and then drawn in an opening movement by the mobile group. A return spring displaces the obturator towards a closed position when the fixed group is deactivated.

In known solenoid valves, the spool may be coupled to the mobile group through a bayonet coupling. The spool may be coupled to the mobile group through a transverse movement. In a first type, the bayonet coupling comprises a through transverse path. Coupling occurs through transverse movement in a first direction. Decoupling may occur through a further movement in the first direction or a reverse transverse movement in a second direction. In a second type, the bayonet coupling comprises a partially closed transverse path. Coupling occurs through transverse movement in a first direction. Decoupling occurs through a reverse transverse movement in a second direction.

The present disclosure is directed, at least in part, to improving or overcoming one or more aspects of the prior art system.

### Brief Summary of the Invention

In a first aspect, the present disclosure describes a a solenoid valve. The solenoid valve comprises a fixed member having a tube portion; a mobile plunger positioned in the tube portion, the mobile plunger being axially movable between a first and a second position; a rod coupled to the mobile plunger and having a spool for control of fluid flow, the rod being axially movable in the tube portion; and an electromagnetic coil positioned externally to the fixed member, characterised in that the rod has a coupling end and the mobile plunger has a coupling element wherein the coupling end hookingly couples to the coupling element.

In a second aspect, the present disclosure describes a method of assembling the solenoid valve. The method may comprise the steps of providing the fixed member having the tube portion and an electromagnetic coil externally positioned on the fixed member; coupling the rod to a mobile plunger, the rod having a spool for control of fluid flow; inserting the mobile plunger in the tube portion, the mobile plunger being axially movable between a first and a second position and the rod being axially movable in the tube portion and hookingly coupling the coupling end of the rod to a coupling element of the mobile plunger.

### Brief Description of the Drawings

The foregoing and other features and advantages of the present disclosure will be more fully understood from the following description of various embodiments, when read together with the accompanying drawings, in which:
Fig. 1 is a cross-sectional view of a solenoid valve according to the present disclosure;
Fig. 1A is an enlarged view of a coupling in the solenoid valve of Fig. 1;
Fig. 1B is an enlarged view of a coupling, in an alternative embodiment, in the solenoid valve of Fig. 1; and
Fig. 2 is a perspective view of a solenoid valve according to the present disclosure.

### Detailed Description

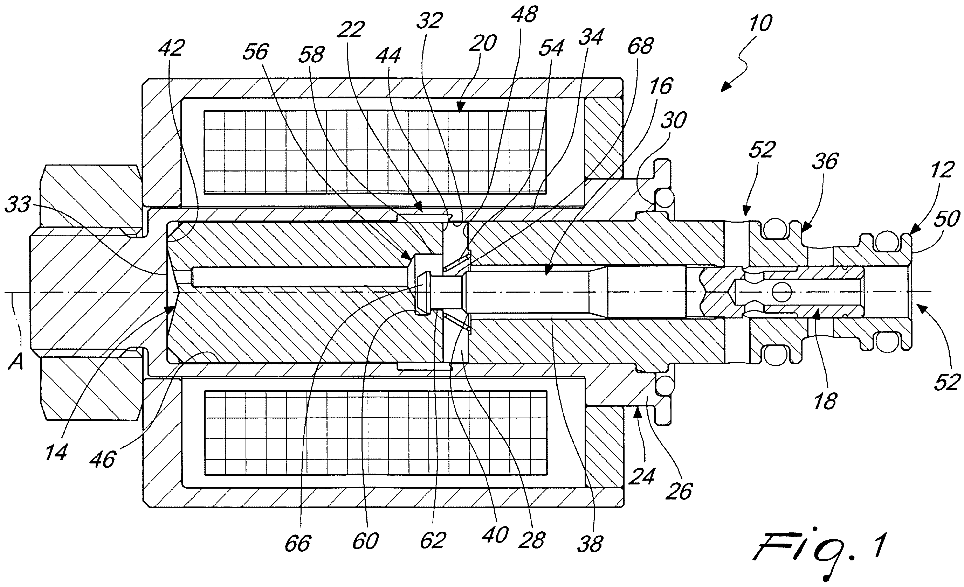

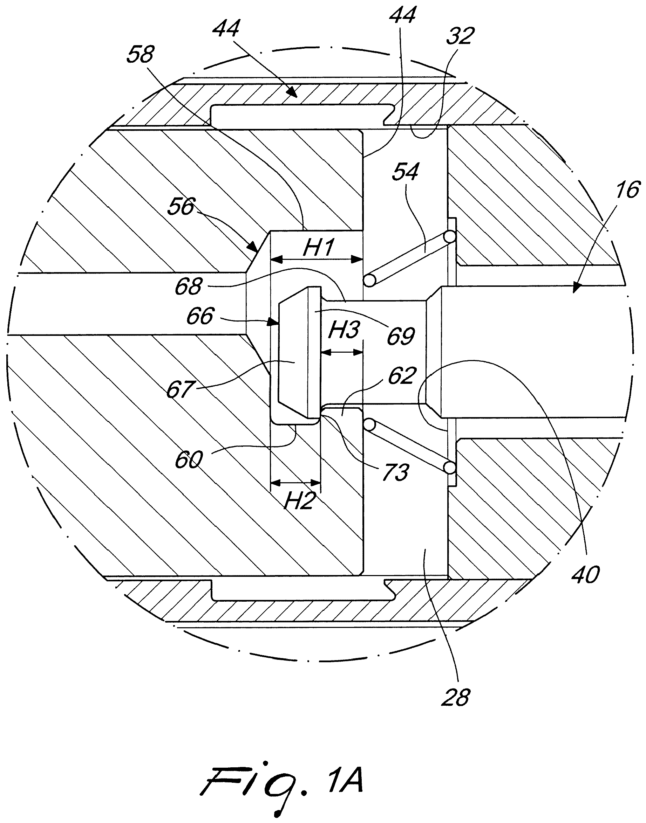

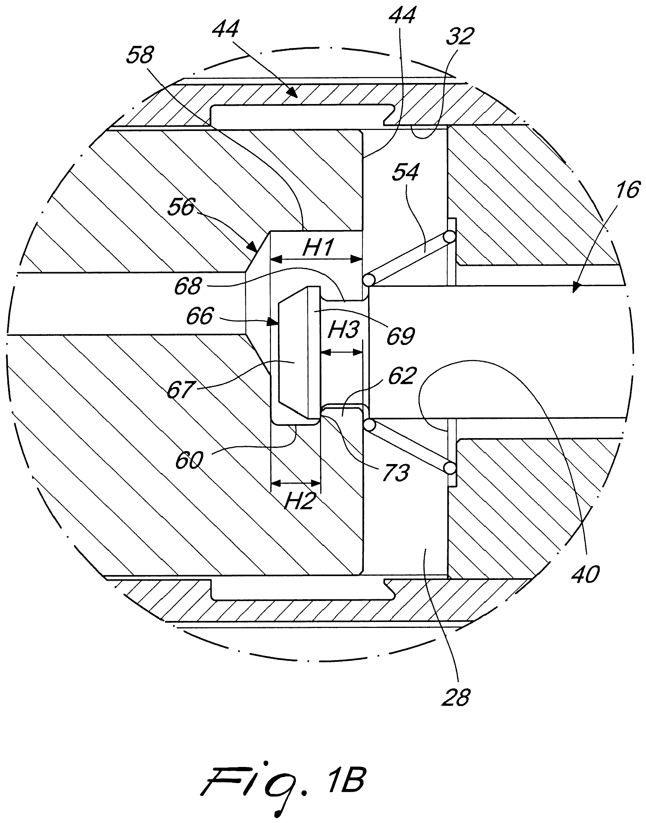

This disclosure generally relates to a solenoid valve for control of fluid flow. Fig. 1 illustrates a cross-section of the solenoid valve **10.** Solenoid valve **10** is an electromagnetically actuated valve. The solenoid valve **10** comprises a fixed member **12,** a mobile plunger **14,** a rod **16** having a spool **18,** an electromagnetic coil **20** and an air gap **22.** Fig. 1 illustrates a non-limiting embodiment of the solenoid valve **10** in a three position, two way proportional pressure reducing valve.

Fixed member **12** comprises a tube portion **24.** Tube portion **24** has a longitudinal axis **A.** Tube portion **24** is hollow with a lateral wall **26** surrounding bore **28.** The lateral wall **26** has an internal surface **32** and an external surface **34.** Tube portion **24** has an opening **30.** Bore **28** is delimited by the internal surface **32** and a base surface **33.** The tube portion **24** is axially elongated. In an embodiment, the tube portion **24** may be cylindrical. Tube portion **24** is made from ferromagnetic material. In an embodiment, the tube portion **24** is at least partially made from ferromagnetic material.

The solenoid valve **10** may further comprise a valve body **36.** The valve body **36** is mounted to the fixed member **12.** The valve body **36** is mounted to the tube portion **24.** Valve body **36** is mounted to the opening **30** of the tube portion **24.** Valve body **36** has a central channel **38.** Channel **38** has an aperture **40.** Channel **38** communicates with the bore **28** through the aperture **40.** Aperture **40** is formed on a first valve body end **48.** First valve body end **48** is positioned in the tube portion **24.** The valve body **36** has a second valve body end **50** formed opposite the first valve body end **48.** Second valve body end **50** is positioned external to the tube portion **24.**

Valve body **36** has a plurality of fluid ports **52.** Fluid ports **52** are positioned external to the fixed member **12.** Fluid ports **52** are spaced from the opening **30.** Fluid ports **52** mutually communicate through the central channel **38.** Second valve body end **50** is configured to carry at least one fluid port **52.** Further, fluid ports **52** may be positioned on the lateral surface of the valve body **36.**

In an embodiment, valve body **36** may be inserted into the bore **28.** A portion of the valve body **36** extends from the opening **30** into the bore **28.** In a further embodiment, the valve body **36** may be made from ferromagnetic material. Valve body **36** may serve to attract the mobile plunger **14** when the electromagnetic coil **20** is activated.

In an alternate embodiment, valve body **36** may be positioned at the opening **30.** The valve body **36** does not extend from the opening **30** into the bore **28.** In yet a further embodiment, the valve body **36** may be made from ferromagnetic material.

In an embodiment, the fixed member **12** further comprises a plunger portion (not shown). Plunger portion is located at an end opposite to the opening **30.** The plunger portion axially extends from the tube portion **24.** Plunger portion axially extends away from the opening **30.** Plunger portion and tube portion **24** may be monolithically formed. In yet a further embodiment, the plunger portion may be made from ferromagnetic material.

In an embodiment, the solenoid valve **10** may further comprise a fixed plunger (not shown). The fixed plunger is positioned in the tube portion **24.** Fixed plunger is positioned in the bore **28.** Fixed plunger may be fixedly positioned against the inner surface **32** of the tube portion **24.** In yet a further embodiment, the fixed plunger may be made from ferromagnetic material.

The mobile plunger **14** is positioned in the fixed member **12.** Mobile plunger **14** is positioned in the tube portion **24.** Mobile plunger **14** is axially movable in the tube portion **24.** Mobile plunger **14** is axially movable in the bore **28.** Mobile plunger **14** is configured to slidably move in the tube portion **24.** Mobile plunger **14** may have a first end **42,** a second end **44** and a contact surface **46.** Contact surface **46** is bordered by the first and second ends **42, 44** at opposite sides. Contact surface **46** is in slidable contact with the internal surface **32** of the lateral wall **26** of the tube portion **24.** First end **42** may abut the base surface **33** of the bore **28.** Second end **44** may face the mobile plunger **14.** Second end **44** may face the first valve body **36.** Second end **44** may abut the first valve body end **48** of the valve body **36.**

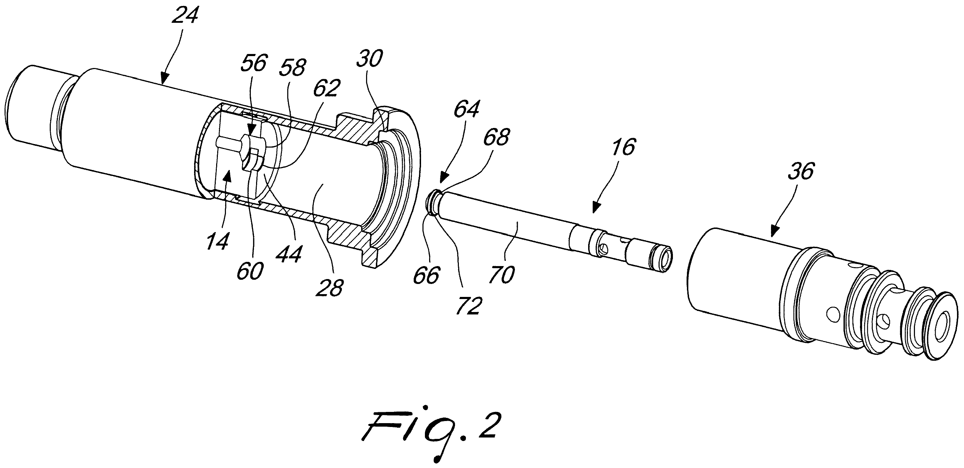

With respect to Figs. 1, 1A and 2, the mobile plunger **14** comprises a coupling element **56.** The second end **44** is configured to have a coupling element **56** for coupling to rod **16.** Coupling element **56** comprises a hole **58.** Hole **58** may be cylindrical. Hole **58** may have a height **H1.** Hole **58** extends into the mobile plunger **14** from the second end **44.** In an embodiment, the hole **58** has an offset position at the second end **44.** Hole **58** has an offset position relative to the longitudinal axis **A.** The central axis of the hole **58** is parallel to the longitudinal axis **A** of the tube portion **24.** Central axis of the hole **58** is not coincident to the longitudinal axis **A** of the tube portion **24.**

A groove **60** is positioned at the side of the hole **58.** Groove extends from the hole **58.** Groove **60** may be formed as a cut-out into the side of the hole **58.** The groove **60** extends radially from the central axis of the hole **58.** Groove **60** extends transversely away from the longitudinal axis **A.** Groove **60** may have a height **H2.** In an embodiment, height **H2** may be longer than the height of the head **66** so as to provide for axial movement of the head **66** in the groove **60.** Groove **60** extends into the mobile plunger **14** from the side of the hole **58.** Groove **60** partially extends along a circumferential direction about the hole **58.** Groove **60** extends under the second end **44.** A shoulder **62** separates the groove **60** from the second end **44.** Shoulder **62** may have a height **H3.** The sum of the heights **H2** of the shoulder **62** and the height **H3** of the groove **60** is substantially equal to the height **H1** of the hole **58.**

The mobile plunger **14** is axially movable between a first and a second position. The mobile plunger **14** may move towards the base surface **33** to the first position. The mobile plunger **14** may move in a first direction of travel. The mobile plunger **14** may move towards the valve body **36** to the second position. The mobile plunger **14** may move in a second direction of travel. First and second positions are the extreme points of travel of the mobile plunger **14.** In an embodiment, the limits of travel of the mobile plunger **14** may be determined by magnetic forces. The mobile plunger **14** may be adjacent the base surface **33** at the first position. The mobile plunger **14** may be adjacent the valve body **36** at the second position. In an alternate embodiment, the limits of travel of the mobile plunger **14** may be determined by the structures in the bore **28.** In a further embodiment, mobile plunger **14** may abut the base surface **33** at a first end of travel that defines the first position. Mobile plunger **14** may abut the valve body **36** at a second end of travel that defines the second position. In an alternate further embodiment, mobile plunger **14** may abut a fixed plunger at a second end of travel that defines the second position.

The solenoid valve **10** further comprises an elastic member **54.** Elastic member **54** is provided to return the mobile plunger **14** from an electromagnetically actuated position. In an embodiment, the elastic member **54** may be compressed when the mobile plunger **14** is at an electromagnetically actuated position. In an embodiment, the elastic member **54** may be extended when the mobile plunger **14** is at an electromagnetically actuated position. The elastic member **54** may be positioned between the mobile plunger **14** and the valve body **36.**

With reference to Fig. 1, the rod **16** is coupled to the mobile plunger **14.** Rod **16** is axially elongated. The rod **16** is axially movable in the tube portion **24.** Rod **16** is supported by the mobile plunger **14** in the bore **28.** Rod **16** extends into the channel **38** of the valve body **36** through aperture **40.** Rod **16** is axially movable in the channel **38.** Rod **16** axially extends along the longitudinal axis **A** of the tube portion **24.**

Rod **16** has a coupling end **64.** The coupling end **64** hookingly couples to the coupling element **56** of the mobile plunger **14.** Coupling end **64** comprises a head **66** and a collar **68.** Head **66** is positioned at the terminal point of the rod **66.** In an embodiment, head **66** has a frustoconical shape. Head has a first portion **67** that is frustoconical and a second portion **69** that is cylindrical. The first portion **67** is contiguous to the second portion **69.**

The head **66** is connected to a stem **70** though the collar **68.** Collar **68** has a reduced diameter with respect to the head **66** and the stem **70**. Collar **68** has a reduced diameter with respect to the stem **70.** The second portion of the head **66** may have the same diameter to the stem **70.** Head **66** has a ledge **72** extending over the collar **68.** Coupling end **64** hookingly couples to the coupling element **56** of the mobile plunger **14** through the interaction of the ledge **72** and the shoulder **62.** Ledge **72** hookingly engages the shoulder **62.**

With reference to Figs. 1A and 2, the head **66** fits into the hole **58.** Head **66** slots into the groove **60.** The head **66** remains in the groove **60** as transverse movement of the head **66** is not possible. At assembly of the solenoid valve **10,** rod **16** is assembled in the valve body **36** which is in turn positioned in the in the tube **24** thereby permitting only axial movement of the rod **16.**

Ledge **72** hookingly engages the shoulder **62** when the head **66** slots into the groove **60.** The ledge **72** abuts the internal surface **73** of the shoulder **62.** The ledge **72** may rest on the side of the groove **60**. In an embodiment, the collar **68** may rest against the shoulder **62.** Rod **16** moves correspondingly with the mobile plunger **14** between the first and second position. The rod **16** may move along the first or the second directions of travel with the mobile plunger **14.**

With reference to Fig. 1B, in an alternative embodiment, the collar **68** is configured such that the shoulder **62** engages the head **66** and the stem **70.** The collar **68** rests on the shoulder **62.** The shoulder **62** may be held between the head **66** and the stem **70.** The circumferential contact surface between the collar **68** and the shoulder **62** may extend to about 208 degrees.

With reference to Figs. 1 and 2, the spool **18** is positioned at an opposite end of the rod **16** relative to the coupling end **64.** In an embodiment, spool **18** is integrated into the rod **16.** In an alternate embodiment, spool **18** is coupled to the rod **16.** The spool **18** spool extends into the valve body **36.** Spool **18** controls fluid flow through the fluid ports **52** in the valve body **36.** Spool **18** moves correspondingly with the mobile plunger **14.** The spool **18** is positionable to control fluid flow through the valve body **36** as the mobile plunger **14** moves between the first and second position. Spool **18** comprises fluid ports **86** and a conduit **88** for flow of fluid.

The electromagnetic coil **20** is positioned externally to the fixed member **12.** Electromagnetic coil **20** is positioned relative to the mobile plunger **14** so as to effect actuation thereof upon activation. In an embodiment, electromagnetic coil **20** is positioned in axial correspondence to the valve body **36** so as to effect actuation the mobile plunger **14** at activation.

Electromagnetic coil **20** is positioned to axially correspond to the valve body **36.** Electromagnetic coil **20** is positioned to partially overlap the valve body **36.** Electromagnetic coil **20** is positioned to axially correspond to the mobile plunger **14.** Electromagnetic coil **20** is positioned to partially overlap the mobile plunger **14.** Electromagnetic coil **20** is positioned to axially correspond to the mobile plunger **14** at the second end **44.** Electromagnetic coil **20** is positioned to partially overlap the second end **44** of the mobile plunger **14.** Electromagnetic coil **20** is positioned to axially correspond to an air gap **22.** Electromagnetic coil **20** is positioned to overlap the air gap **22.**

The air gap **22** is positioned in tube portion **24.** The air gap **22,** in the tube portion **22,** is positioned between the electromagnetic coil **20** and the mobile plunger **14.** The air gap **22** is axially located along the tube portion **24** so as to be positioned between the electromagnetic coil **20** and the mobile plunger **14.** The air gap **22** is positioned between the electromagnetic coil **20** and the mobile plunger **14** in the radial direction relative to a longitudinal axis **A** of the tube portion **24.** In an embodiment, the air gap **22** is positioned remote from the base surface **33** of the bore **28.** The air gap **22** is spaced from the valve body **36.** The air gap **22** may be positioned about the coupling of the coupling element **56** and the coupling end **64.** The air gap **22** encircles the coupling end **64** hookingly coupled to the coupling element **56.** The air gap **22** encircles the head **66** slotted into the groove **60.**

In an alternative embodiment, the solenoid valve **10** may have a first and a second electromagnetic coils **20.** The second magnetic coil **20** may be positioned adjacent to the first electromagnetic coil **20**.

A method of assembling the solenoid valve **10** may comprise the steps of providing the fixed member **12** having the tube portion **24;** coupling the rod **16** to a mobile plunger **14,** the rod **16** having the spool **18** for control of fluid flow; inserting the mobile plunger **14** in the tube portion **24,** the mobile plunger **14** being axially movable between a first and a second position and the rod **16** being axially movable in the tube portion **24;** and positioning the electromagnetic coil **20** externally to the fixed member **16,** and hookingly coupling the coupling end **64** of the rod **16** to a coupling element **56** of the tube portion **24.**

The coupling end **64** comprises the head **66** and the coupling element **56** has a hole **58.** The method comprises inserting the head **66** into the hole **58** along an axial direction. The head **66** is inserted in a direction along the longitudinal axis **A.**

The coupling element **56** further comprises the groove **60** extending from a side of the hole **58.** The method comprises slotting the head **66** into the groove **60** along a transverse direction. The head **66** is slotted in a direction transverse to the longitudinal axis **A.** The valve body **36** is mounted to the rod **16** prior to the coupling of the rod **16** to the mobile plunger **14.**

The skilled person would appreciate that foregoing embodiments may be modified or combined to obtain the solenoid valve **10** of the present disclosure.

### Industrial Applicability

This disclosure describes a solenoid valve **10** having a hooking type coupling system that couples the rod **16** to the tube portion **24.** The hooking type coupling has the advantage of increasing the speed of assembly and of recovering the radial clearance, without increasing the axial clearance which affect the movement of the mobile plunger. The hooking type coupling between the coupling element **56** wherein the coupling end **64** results in less ferromagnetic material being removed from the mobile plunger **14.** Removal of excess ferromagnetic material negatively reduces the electromagnetic forces. Removal of less ferromagnetic material in the magnetic field closing zone allows the maximum efficiency of the magnetic force to be maintained. In the solenoid valve **10** that has the mobile plunger **14** connected to the spool **18** ensures greater stability in dynamic operation as the said components always move together and without any delay being imparted from one component to another.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A solenoid valve (10) comprising:
a fixed member (12) having a tube portion (24);
a mobile plunger (14) positioned in the tube portion (24), the mobile plunger (14) being axially movable between a first and a second position;
a rod (16) coupled to the mobile plunger (14) and having a spool (18) for control of fluid flow, the rod (16) being axially movable in the tube portion (24); and
an electromagnetic coil (20) positioned externally to the fixed member (16), **characterised in that** the rod (16) has a coupling end (64) and the mobile plunger (14) has a coupling element (56) wherein the coupling end (64) hookingly couples to the coupling element (56).

2. The solenoid valve (10) of claim 1 wherein the coupling element (56) is positioned at a second end (44) of the mobile plunger (14) and comprises a hole (58).

3. The solenoid valve (10) of claim 2 wherein the coupling element (56) comprises a groove (60) extending from the hole (58).

4. The solenoid valve (10) of claim 3 wherein the coupling end (64) comprises a head (66) and a collar (68) wherein the head (66) engages into the groove (60).

5. The solenoid valve (10) of claims 1, 2, 3 or 4 wherein the coupling element (56) comprises a shoulder (62) and the coupling end (64) comprises a ledge (72), the ledge (72) hookingly engages the shoulder (62).

6. The solenoid valve (10) of claims 4 or 5 further comprising an air gap (22) positioned in tube portion (24) between the electromagnetic coil (20) and the mobile plunger (14), wherein the air gap (22) is positioned about the coupling end (64) hookingly coupled to the coupling element (56).

7. The solenoid valve (10) of claim 6 wherein the air gap (22) encircles the head (66) slotted into the groove (60).

8. A method of assembling the solenoid valve (10) comprises the steps of:
providing a fixed member (12) having a tube portion (24) and having an electromagnetic coil (20) externally postioned on the fixed member (16),;
coupling a rod (16) to a mobile plunger (14), the rod (16) having a spool (18) for control of fluid flow; and
inserting the mobile plunger (14) in the tube portion (24), the mobile plunger (14) being axially movable between a first and a second position and the rod (16) being axially movable in the tube portion (24);
**characterised by** the step of hookingly coupling a coupling end (64) of the rod (16) to a coupling element (56) of the mobile plunger (14).

9. The method of claim 8 wherein the coupling end (64) comprises a head (66) and the coupling element (56) has a hole (58) and **characterised by** the step of inserting the head (66) into the hole (58) along an axial direction.

10. The method of claim 9 wherein the coupling element (56) further comprises a groove (60) extending from a side of the hole (58) **characterised by** the step of slotting the head (66) into the groove (60) along a transverse direction.
